(19) **Europäisches Patentamt**

**European Patent Office**

**Office européen des brevets**

(11) Veröffentlichungsnummer: **0 443 539 B1**

(12) # EUROPÄISCHE PATENTSCHRIFT

(45) Veröffentlichungstag der Patentschrift: **07.12.94**

(21) Anmeldenummer: **91102401.6**

(22) Anmeldetag: **20.02.91**

(51) Int. Cl.5: **C01B 33/20**, B01J 29/04, C01B 33/34

(54) Verfahren zur Herstellung von Gallosilikaten und ihre Verwendung zur Herstellung von Katalysatoren und/oder Adsorbentien.

(30) Priorität: **22.02.90 DE 4005613**

(43) Veröffentlichungstag der Anmeldung:
**28.08.91 Patentblatt 91/35**

(45) Bekanntmachung des Hinweises auf die
Patenterteilung:
**07.12.94 Patentblatt 94/49**

(84) Benannte Vertragsstaaten:
**BE CH DE ES FR GB IT LI NL**

(56) Entgegenhaltungen:
**EP-A- 0 323 893**
**GB-A- 2 102 779**
**US-A- 4 803 060**
**US-A- 4 919 907**

(73) Patentinhaber: **VAW Aluminium AG**
**Georg-von-Boeselager-Strasse 25**
**D-53117 Bonn (DE)**

(72) Erfinder: **Wallau, Martin**
**Am Schinnergraben 85**
**6500 Mainz-Hechtsheim (DE)**
Erfinder: **Tissler, Arno Dr.**
**Koernicke Strasse 2**
**5300 Bonn 1 (DE)**
Erfinder: **Thome, Roland Dr.**
**Brüsseler Strasse 58**
**5300 Bonn 1 (DE)**
Erfinder: **Unger, Klaus Prof. Dr.**
**Am Altenberg 40**
**6104 Seeheim-Jugenheim (DE)**

(74) Vertreter: **Müller-Wolff, Thomas**
**HARWARDT NEUMANN,**
**Patent- und Rechtsanwälte,**
**Postfach 14 55**
**D-53704 Siegburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Gallosilikaten, insbesonders von zeolithanalogen Gallosilikaten mit Pentasilstruktur, und ihre Verwendung zur Herstellung von Katalysatoren und/oder Adsorbentien.

Die Zusammensetzung der zeolithanalogen Gallosilikate wird durch die chemische Formel

$$(M^{n+})x/n[(GaO_2)x \ (SiO_2) \ 96-x]$$

beschrieben, worin M ein Alkali- oder Erdalkalielement der Wertigkeit n darstellt und x Werte zwischen 0 und 10 annehmen kann. Zeolithe und zeolithanaloge Gallosilikate gehören zu den Tektosilikaten. Ihre Struktur besteht aus über Ecken verknüpften $TO_4$ - Tetraedern, wobei die Sauerstoffatome jeweils zwei T-Atomen zugehören. Die Natur des T- Atoms ist variabel. Neben dem vierbindigen Silizium können dreibindige Atome wie Aluminium oder Gallium ins Gitter eingebaut werden. Die Tetraeder bilden Ketten und Schichten und bauen ein definiertes Hohlraumsystem mit Öffnungsweiten in molekularen Dimensionen auf. Diese Öffnungsweiten der Kanäle und Poren bestimmen die Zugänglichkeit zur inneren Hohlraumstruktur für Stoffe entsprechend ihrer Form und Gestalt und verleihen somit diesen porösen Körpern Trenneigenschaften. Werden die Alkali- oder Erdalkaliatome nach der Synthese durch Protonen ersetzt, gelangt man zu wirksamen heterogenen, sauren Katalysatoren.

Zeolithanaloge Gallosilikate eignen sich besonders für den Einsatz als Katalysatoren in der petrochemischen Industrie und zur Herstellung wertvoller organischer Zwischenprodukte. Insbesondere finden sie aufgrund ihrer Dehydrierungs- und Aromatisierungseigenschaften Verwendung bei der Umwandlung niederer Alkane und Alkene, die heute oft noch abgefackelt werden, zu höheren Aliphaten, Cycloaliphaten und besonders zu einfachen Aromaten. Aromate wie Benzol, Toluol oder Xylole sind wichtige Ausgangsstoffe für zahlreiche Synthesen zur Erzeugung von Kunstfasern, Polyestern und anderen Kunststoffen. Sie finden ebenso Verwendung als oktanzahlsteigernde Substanzen in bleifreiem Benzin.

Bisher bekannte Verfahren zur Herstellung von zeolithanalogen Gallosilikaten mit Pentasilstruktur benötigen organische strukturlenkende oder strukturstabilisierende Verbindungen. Meist sind dies Amine, die neben dem Kostenfaktor eine nicht unwesentliche Umweltgefährdung darstellen können. Aufgabe der vorliegenden Erfindung ist es, ein umweltschonendes, wenig energieaufwendiges und kostengünstiges Verfahren zur Herstellung von Gallosilikaten mit Pentasilstruktur mit katalytischen Eigenschaften und/oder Molekularsieb-Charakter anzubieten.

Überraschenderweise gelingt es nun, durch die Verwendung eines bei der metallurgischen Erzeugung von Silizium anfallenden Feinstaubes mit 86 - 99 Gew. % $SiO_2$ zeolithanaloge Gallosilikate mit Pentasilstruktur herzustellen, wobei auf den Einsatz dieser umweltschädlichen und meistens giftigen Substanzen vollständig verzichtet werden kann. Durch die erfindungsmäßige Herstellung der zeolithanalogen Gallosilikate fallen bei der Synthese weder im Abwasser noch in der Abluft schädliche organische Substanzen an. Hinzu kommt, daß auf den energieintensiven Schritt zum Ausbrennen dieser Substanzen aus dem Gitter verzichtet werden kann und erfindungsgemäß hergestellte Gallosilikate direkt nach der Synthese durch Ionentausch in wirksame Katalysatoren übergeführt werden können.

Die Erfindung wird durch folgende Beispiele näher erläutert.

Beispiel 1:

1,459 Gramm eines bei der metallurgischen Erzeugung von Silizium anfallenden Feinstaubes mit 86 - 99 Gew. % $SiO_2$ werden in 20 ml Wasser das 0,435 Gramm gelöstes NaOH enthält dispergiert. Zu dieser Dispersion gibt man unter Rühren 0,027 Gramm in 15 ml verdünnter Salzsäure gelöstes Gallium. Dieser Reaktionsansatz mit den molaren Verhältnissen:

$SiO_2/Ga_2O_3 = 119$; $OH^-/SiO_2 = 0,42$ und $H_2O/SiO_2 = 84$

wird in einen Autoklaven mit 50 ml Volumen überführt und 72 Stunden bei 453 K unter autogenem Druck hydrothermal umgesetzt. Man erhält nach Filtration und Waschung ca. 1,2 Gramm eines zu mindestens 40% kristallinen Gallosilikats, das im Röntgendiffraktogramm zumindest die zu den in Tabelle 1 aufgelisteten Netzebenenabständen zugehörigen Röntgenreflexe aufweist.

Beispiel 2:

74,203 Gramm eines bei der metallurgischen Erzeugung von Silizium anfallenden Feinstaubes mit 86 - 99 Gew. % $SiO_2$ werden in 1700 ml Wasser das 21,131 Gramm gelöstes NaOH enthält in einem 2 Liter Autoklaven unter Rühren dispergiert. Anschließend wird 1,135 Gramm Gallium in verdünnter salzsaurer Lösung zur Suspension zugegeben. Dieser Reaktionsansatz mit den molaren Verhältnissen:

$SiO_2/Ga_2O_3$ = 125; $OH^-/SiO_2$ = 0,4 und $H_2O/SiO_2$ = 80

wird unter ständigem Rühren auf 413 K aufgeheizt und 6,5 Stunden bei dieser Temperatur gehalten. Anschließend wird auf 433 K aufgeheizt und die Reaktionsmischung 7,5 Stunden bei dieser Temperatur gehalten. Anschließend wird auf 453 K aufgeheizt und die Reaktionsmischung 10 Stunden bei dieser Temperatur gehalten. Danach wird die Temperatur auf 473 K erhöht und die Reaktionsmischung 16 Stunden bei dieser Temperatur gehalten. Nach Abkühlen der Reaktionsmischung, Filtration und Waschung erhält man ca. 70 Gramm eines zu mindestens 50% kristallinen Gallosilikats, das im Röntgendiffraktogramm zumindest die zu den in Tabelle 1 aufgelisteten Netzebenenabständen zugehörigen Röntgenreflexe aufweist.

Beispiel 3:

1,528 Gramm eines bei der metallurgischen Erzeugung von Silizium anfallenden Feinstaubes mit 86 - 99 Gew. % $SiO_2$ werden in 20 ml Wasser, das 0,387 Gramm gelöstes NaOH enthält dispergiert. Zu dieser Dispersion gibt man unter Rühren 0,027 Gramm in 15 ml verdünnter Salzsäure gelöstes Gallium. Dieser Reaktionsansatz mit den Molverhältnissen:

$SiO_2/Ga_2O_3$ = 125; $OH^-/SiO_2$ = 0,35 und $H_2O/SiO_2$ = 80

wird in einen Autoklaven mit 50 ml Volumen überführt und 48 Stunden bei 453 K in einem Trockenschrank mit einer Drehvorrichtung über Kopf mit einer Frequenz von 0,5 Hertz rotiert. Nach Abkühlung der Reaktionsmischung, Filtration und Waschung erhält man ca. 1,3 Gramm eines zumindestens 60% kristallinen Gallosilikats, das im Röntgendiffraktogramm zumindest die zu den in Tabelle 1 zugehörigen Netzebe-nenabständen zugehörigen Röntgenreflexe aufweist.

## Tabelle 1:

### Netzebenenabstände d der in den Beispielen 1 - 3 synthetisierten Gallosilikate.

| d (Ångström) | | | Intensität |
|---|---|---|---|
| ========================= | | | |
| 11,2 | +/- | 0,2 | stark |
| 10,0 | +/- | 0,2 | stark |
| 6,4 | +/- | 0,1 | schwach |
| 5,95 | +/- | 0,1 | schwach |
| 5,6 | +/- | 0,1 | schwach |
| 3,87 | +/- | 0,05 | stark |
| 3,83 | +/- | 0,05 | stark |
| 3,76 | +/- | 0,05 | schwach |
| 3,74 | +/- | 0,05 | mittelstark |
| 3,66 | +/- | 0,05 | schwach |
| 2,01 | +/- | 0,02 | schwach |
| 1,99 | +/- | 0,02 | schwach |

**Patentansprüche**

1. Verfahren zur Herstellung von zeolithanalogen Gallosilikaten mit Pentasilstruktur, wobei das Si/Ga-Atomverhältnis von ≧ 10 durch hydrothermale Kristallisation aus einem Reaktionsansatz erhalten wird, der in wässrig alkalischem Medium $SiO_2$ und $Ga_2O_3$ bzw. deren hydratisierte Derivate oder Alkalisilikate und -gallate enthält,
   dadurch gekennzeichnet,
   daß als Siliziumquelle ein bei der metallurgischen Erzeugung von Silizium anfallender Feinstaub mit 86 - 99 Gew.-% $SiO_2$ eingesetzt wird, der aus runden Partikeln mit einer Teilchengröße von 0,1 - 5 $\mu$m besteht, und der Reaktionsansatz frei von organischen Kohlenwasserstoffverbindungen oder Stickstoffverbindungen ist.

2. Verfahren nach Anspruch 1,
   dadurch gekennzeichnet,
   daß im Reaktionsansatz folgende molare Verhältnisse vorliegen:
   $SiO_2/Ga_2O_3$ = 40 - 140; $OH^-/SiO_2$ = 0,1 - 0,6; $H_2O/SiO_2$ = 20 - 120; $Na_2O/SiO_2$ = 0,1 - 0,4.

3. Verfahren nach einem der vorhergehenden Ansprüche,
   dadurch gekennzeichnet,
   daß im Reaktionsansatz folgende molare Verhältnisse vorliegen:
   $SiO_2/Ga_2O_3$ = 100 - 130; $OH^-/SiO_2$ = 0,3 - 0,45; $H_2O/SiO_2$ = 60 - 100; $Na_2O/SiO_2$ = 0,15 - 0,25.

4. Verfahren nach einem der vorhergehenden Ansprüche,
   dadurch gekennzeichnet,
   das der hergestellte kristalline zeolithanaloge Gallosilikat zumindest die in nachfolgender Tabelle aufgeführten Netzebenenabstände aufweist:

   | d (Angström) | Intensität |
   |---|---|
   | 11,2 +/- 0,2 | stark |
   | 10,0 +/- 0,2 | stark |
   | 6,4 +/- 0,1 | schwach |
   | 5,95 +/- 0,1 | schwach |
   | 5,6 +/- 0,1 | schwach |
   | 3,87 +/- 0,05 | stark |
   | 3,83 +/- 0,05 | stark |
   | 3,76 +/- 0,05 | schwach |
   | 3,74 +/- 0,05 | mittelstark |
   | 3,66 +/- 0,05 | schwach |
   | 2,01 +/- 0,02 | schwach |
   | 1,99 +/- 0,02 | schwach |

5. Verfahren nach einem der vorhergehenden Ansprüche,
   dadurch gekennzeichnet,
   daß die hydrothermale Kristallisation bei einer Temperatur von 413 K - 473 K über einen Zeitraum von 1 - 100 Stunden erfolgt.

6. Verfahren nach einem der vorhergehenden Ansprüche wobei die hydrothermale Behandlung auf mehreren hintereinander zu durchlaufenden Temperaturniveaus stattfindet,
   dadurch gekennzeichnet,
   daß das Mischen der einzelnen Reaktionskomponenten bei einer Temperatur von 293 K bis 353 K und die hydrothermale Umsetzung der Reaktionsmischung in einem ersten Temperaturbereich von 413 K bis 453 K über 1 - 20 Stunden und einem Zweiten Temperaturbereich von größer als 453 K über 1 - 100 Stunden erfolgt.

7. Verfahren nach einem der vorhergehenden Ansprüche,
   dadurch gekennzeichnet,

daß der Feinstaub folgende Zusammensetzung aufweist:

| | |
|---|---|
| $SiO_2$ | 86 - 98,0 % |
| SiC | 0,1 - 1,0 % |
| $K_2O$ | 0,2 - 3,5 % |
| $Al_2O_3$ | 0,1 - 0,5 % |
| MgO | 0,2 - 3,5 % |
| $SO_4^{2-}$ | 0,1 - 0,4 % |
| $Na_2O$ | 0,1 - 1,8 % |
| CaO | 0,05 - 0,3 % |
| $Fe_2O_3$ | 0,01 - 1,0 % |
| Glühverlust | 0,5 - 4,0 % |
| davon C (frei) | 0,2 - 2,0 % |

8.  Verfahren nach einem der vorhergehenden Ansprüche,
    dadurch gekennzeichnet,
    daß die Gallosilikate direkt nach der Kristallisation einem Ionenaustausch unterzogen werden.

9.  Verwendung der nach Anspruch 1 - 8 hergestellten kristallinen zeolithanalogen Gallosilikate zur Herstellung von Katalysatoren und/oder Adsorbentien.

10. Katalysator auf Basis kristalliner zeolithanaloger Gallosilikate mit Pentasilstruktur,
    dadurch gekennzeichnet,
    daß im Reaktionsansatz folgende molare Verhältnisse vorliegen:
    $SiO_2/Ga_2O_3$ = 40 - 140; $OH^-/SiO_2$ = 0,1 - 0,6; $H_2O/SiO_2$ = 20 - 120; $Na_2O/SiO_2$ = 0,1 - 0,4.

## Claims

1.  A process of producing zeolite-analogous Gallo-silicates with a pentasil structure, with the Si/Ga atom ratio of $\geq$ 10 being achieved by hydrothermal crystallisation from a reaction mixture which, in an aqueous alkaline medium, contains $SiO_2$ and $Ga_2O_3$ and their hydratised derivatives or alkali silicates and alkali gallates,
    characterised in
    that the silicon source used is a fine dust which comprises 86 - 99 weight % $SiO_2$, which occurs during the metallurgical production of silicon and which consists of round particles with a particle size of 0.1 - 5 $\mu$m, and that the reaction mixture is free from organic hydrocarbon compounds or nitrogen compounds.

2.  A process according to claim 1,
    characterised in
    that the molar ratios in the reaction mixture are as follows:
    $SiO_2/Ga_2O_3$ = 40 - 140; $OH^-/SiO_2$ = 0.1 - 0.6; $H_2O/SiO_2$ = 20 - 120; $Na_2O/SiO_2$ = 0.1 - 0.4.

3.  A process according to any one of the preceding claims,
    characterised in
    that the molar ratios in the reaction mixture are as follows:
    $SiO_2/Ga_2O_3$ = 100 - 130; $OH^-/SiO_2$ = 0.3 - 0.45; $H_2O/SiO_2$ = 60 - 100; $Na_2O/SiO_2$ = 0.15 - 0.25.

4.  A process according to any one of the preceding claims,
    characterised in
    that the crystalline zeolite-analogous Gallo silicate as produced features at least the interplanar spacing values listed in the following table:

| d (Angström) | Intensity |
|---|---|
| 11.2 ± 0.2 | strong |
| 10.0 ± 0.2 | strong |
| 6.4 ± 0.1 | weak |
| 5.95 ± 0.1 | weak |
| 5.6 ± 0.1 | weak |
| 3.87 ± 0.05 | strong |
| 3.83 ± 0.05 | strong |
| 3.76 ± 0.05 | weak |
| 3.74 ± 0.05 | medium-strong |
| 3.66 ± 0.05 | weak |
| 2.01 ± 0.02 | weak |
| 1.99 ± 0.02 | weak |

5. A process according to any one of the preceding claims,
characterised in
that hydrothermal crystallisation takes place at a temperature of 413 K - 473 K over a period of 1 - 100 hours.

6. A process according to any one of the preceding claims, with hydrothermal treatment taking place at several temperature levels to be passed through one after the other,
characterised in
that the individual reaction constituents are mixed at a temperature of 293 K to 353 K and that the hydrothermal conversion of the reaction mixture takes place in a first temperature range of 413 K to 453 K over a period of 1 - 20 hours and in a second temperature range greater than 453 K over a period of 1 - 100 hours.

7. A process according to any one of the preceding claims,
characterised in
that the composition of the fine dust is as follows:

| | |
|---|---|
| $SiO_1$ | 86 - 98.0% |
| $SiC$ | 0.1 - 1.0% |
| $K_2O$ | 0.2 - 3.5% |
| $Al_2O_3$ | 0.1 - 0.5% |
| $MgO$ | 0.2 - 3.5% |
| $SO_4^{2-}$ | 0.1 - 0.4% |
| $Na_2O$ | 0.1 - 1.8% |
| $CaO$ | 0.05 - 0 3% |
| $Fe_2O_3$ | 0.01 - 1.0% |
| Annealing loss | 0.5 - 4.0% |
| C % thereof (free) | 0.2 - 2.0% |

8. A process according to any one of the preceding claims,
characterised in
that directly after crystallisation, the Gallo-silicates are subjected to an ion exchange.

9. Using the crystalline zeolite-analogous Gallo-silicates produced in accordance with claims 1 - 8 for producing catalysts and/or adsorbents.

10. A catalyst based on crystalline zeolite-analogous Gallo-silicates with a pentasil structure,
characterised in
that the molar ratios in the reaction mixture are as follows:
$SiO_2/Ga_2O_3$ = 40 - 140; $OH^-/SiO_2$ = 0.1 - 0.6; $H_2O/SiO_2$ = 20 - 120; $Na_2O/SiO_2$ = 0.1 - 0.4.

## Revendications

1. Procédé pour la fabrication de gallosilicate de type zéolithe avec une structure pentasile, où l'on obtient un rapport atomique Si/Ga ≥ 10 par cristallisation hydrothermale à partir d'un dépôt réactionnel, qui contient dans un milieu aqueux alcalin du $SiO_2$ et du $Ga_2O_3$ ou leurs dérivés hydratés ou bien des silicates ou des galates alcalins,
caractérisé en ce que,
on utilise comme source de silicium une poudre finement divisée qui provient de la production métallurgique du silicium, contenant de 86 à 99 % en poids de $SiO_2$, laquelle se compose de particules sphériques ayant une granulométrie comprise entre 0,1 et 5 $\mu$m, et en ce que le dépôt réactionnel ne contient pas de composés organiques hydrocarbonés ou azotés.

2. Procédé selon la revendication 1,
caractérisé en ce que,
l'on recontre dans le dépôt réactionnel les rapports molaires suivants :
$SiO_2/Ga_2O_3$ = 40 - 140; $OH^-/SiO_2$ = 0,1 - 0,6; $H_2O/SiO_2$ = 20 - 120; $Na_2O/SiO_2$ = 0,1 - 0,4.

3. Procédé d'après l'une des revendications précédantes,
caractérisé en ce que,
l'on rencontre dans le dépôt réactionnel les rapports molaires suivants:
$SiO_2/Ga_2O_3$ = 100 - 130; $OH^-/SiO_2$ = 0,3 - 0,45; $H_2O/SiO_2$ = 60 - 100; $Na_2O/SiO_2$ = 0,15 - 0,25.

4. Procédé d'après l'une des revendications précédentes,
caractérisé en ce que,
le gallosilicate cristallin de type zéolithe que l'on a fabriqué présente au minimum les écartements de plan cristallin présentés dans le tableau ci-dessous :

| Intensité d (Angström) | |
|---|---|
| 11,2 +/- 0,2 | fort |
| 10,0 +/- 0,2 | fort |
| 6,4 +/- 0,1 | faible |
| 5,95 +/- 0,1 | faible |
| 5,6 +/- 0,1 | faible |
| 3,87 +/- 0,05 | fort |
| 3,83 +/- 0,05 | fort |
| 3,76 +/- 0,05 | faible |
| 3,74 +/- 0,05 | moyennement fort |
| 3,66 +/- 0,05 | faible |
| 2,01 +/- 0,02 | faible |
| 1,99 +/- 0,02 | faible |

5. Procédé d'après l'une des revendications précédentes,
caractérisé en ce que,
la cristallisation hydrothermale se produit à une température comprise en 413° K et 473° K sur un laps de temps allant de 1 à 100 secondes.

6. Procédé d'après l'une des revendications précédentes, dans lequel le traitement hydrothermal a lieu sur plusieurs niveaux de température qui doivent se succéder l'un après l'autre,
caractérisé en ce que,
le mélange des différents composants de la réaction se fait à une température comprise entre 293° K et 353° K et que la réaction hydrothermale du mélange réactionnel se produit dans un premier domaine de température compris entre 413° K et 453° K sur une durée allant de 1 à 20 heures et dans un second domaine de température supérieur à 453° K sur une durée allant de 1 à 100 heures.

7. Procédé d'après l'une des revendications précédentes,
caractérisé en ce que,

la poudre finement divisée présente la composition suivante:

| | |
|---|---|
| $SiO_2$ | 86 - 98,0 % |
| SiC | 0,1 - 1,0 % |
| $K_2O$ | 0,2 - 3,5 % |
| $Al_2O_3$ | 0,1 - 0,5 % |
| MgO | 0,2 - 3,5 % |
| $SO_4^{2-}$ | 0,1 - 0,4 % |
| $Na_2O$ | 0,1 - 1,8 % |
| CaO | 0,05 - 0,3 % |
| $Fe_2O_3$ | 0,01 - 1,0 % |
| Pertes par calcination | 0,5 - 4,0 % |
| dont C (libre) | 0,2 - 2,0 % |

8.  Procédé d'après l'une des revendications précédentes,
    caractérisé en ce que,
    les gallosilicates sont soumis directement après la cristallisation à un échange d'ions.

9.  Emploi de gallosilicates cristallins de type zéolithe fabriqués d'après les revendications 1 à 8 pour la fabrication de catalyseurs et/ou d'agents adsorbants.

10. Catalyseur à base de gallosilicates cristallins de type zéolithe ayant une structure pentasile,
    caractérisé en ce que,
    l'on trouve les rapports molaires suivants dans le dépôt réactionnel :
    $SiO_2/Ga_2O_3$ = 40 - 140; $OH^-SiO_2$ = 0,1 - 0,6; $H_2O/SiO_2$ = 20 - 120; $Na_2O/SiO_2$ = 0,1 - 0,4.